(19) Europäisches Patentamt
European Patent Office
Office européen des brevets

(11) **EP 1 209 386 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.[7]: **F16J 15/34**

(21) Anmeldenummer: **01126637.6**

(22) Anmeldetag: **08.11.2001**

(54) **Gleitringdichtungsanordnung für hohe Drehgeschwindigkeiten**

Mechanical seal for high turning velocities

Garniture étanche à anneau glissant pour vitesse de rotation élevée

(84) Benannte Vertragsstaaten:
**DE FR GB**

(30) Priorität: **23.11.2000 DE 20019881 U**

(43) Veröffentlichungstag der Anmeldung:
**29.05.2002 Patentblatt 2002/22**

(73) Patentinhaber: **Burgmann Dichtungswerke GmbH & Co. KG**
**82515 Wolfratshausen (DE)**

(72) Erfinder:
• **Schulten, Berthold**
**82538 Geretsried (DE)**
• **Wolf, Werner**
**82291 Mammendorf (DE)**
• **Haselbacher, Peter**
**82538 Geretsried (DE)**
• **Keller, Thomas**
**82538 Geretsried (DE)**

(74) Vertreter: **Schmidt, Horst, Dr.**
**Patentanwalt**
**Postfach 44 01 20**
**80750 München (DE)**

(56) Entgegenhaltungen:
**EP-A- 0 380 749**        **EP-A- 0 972 974**
**NL-A- 9 301 417**        **US-A- 4 426 092**
**US-A- 5 626 347**

• AMRAT PARMAR: "DESIGNING OUT THERMAL DISTORTION EXTENDS MECHANICAL FACE SEAL LIFE" DESIGN ENGINEERING, MORGAN-GRAMPIAN LTD. LONDON, GB, 1. August 1989 (1989-08-01), Seite 28,30,33,36 XP000030336 ISSN: 0308-8448
• PARMAR A: "THERMAL DISTORTION CONTROL IN MECHANICAL SEALS" WORLD PUMPS, TRADE AND TECHNICAL PRESS LTD. MORDEN, GB, Nr. 9, 1. September 1989 (1989-09-01), Seiten 321-327, XP000103733 ISSN: 0262-1762
• BARNES N D ET AL: "DESIGN OF PUMP CHAMBERS FOR IMPROVED MECHANICAL SEAL RELIABILITY" WORLD PUMPS, TRADE AND TECHNICAL PRESS LTD. MORDEN, GB, Nr. 307, 1. April 1992 (1992-04-01), Seiten 32-39, XP000271014 ISSN: 0262-1762
• PATENT ABSTRACTS OF JAPAN vol. 2000, no. 03, 30. März 2000 (2000-03-30) & JP 11 344127 A (NIPPON PILLAR PACKING CO LTD), 14. Dezember 1999 (1999-12-14)

EP 1 209 386 B1

**Beschreibung**

Die Erfindung betrifft eine Gleitringdichtungsanordnung zum Einsatz bei mit hoher Drehgeschwindigkeit rotierenden Bauteilen gemäss dem Oberbegriff des Patentanspruchs 1.

Die Erfindung betrifft insbesondere eine Gleitringdichtungsanordnung zum Einsatz bei Turbinentriebwerken, z.B. im Flugzeugbau. Bei derartigen Anwendungen sind keramische Materialpaarungen für die Gleitringe nicht zulässig, obschon diese aufgrund ihrer guten Verschleisseigenschaften grundsätzlich bevorzugt geeignet wären. Es kommen deshalb vorzugsweise Materialpaarungen mit einem Stahlmaterial für den rotierenden Gleitring in Betracht, wobei der stationäre Gleitring aus einem Kohlenstoffmaterial bestehen kann. Bei den hohen Drehgeschwindigkeiten, die bei solchen Anwendungen zum Einsatz kommen, können die Gleitringe trotz fehlender unmittelbarer Berührung wegen Reibung mit dem gasförmigen oder flüssigen Medium im Dichtspalt zwischen den zusammenwirkenden Gleitringen (Molekularreibung) eine Erwärmung in einem solchen Ausmass erfahren, dass dies zu thermisch bedingten Verformungen bzw. Verkantungen, insbesondere des rotierenden Gleitringes führt, die die Dichtspaltgeometrie in unerwünschter Weise verändern können. Der Dichtspalt kann sich insbesondere keilförmig öffnen (so genannte V-Spaltbildung), was deutlich erhöhte Leckage zur Folge hat.

Eine Veröffentlichung von Amrat Parmer zu diesem Thema: ist der Zeitschrift "Design Engineering, Morgan - Grampian LTD, vol. 232, 1.8.1989" unter dem Titel "Designing out thermal distortion extends mechanical seal life" erschienen.

Der Erfindung liegt die Aufgabe zugrunde, eine Gleitringdichtungsanordnung der gattungsgemässen Art mit einem rotierenden Gleitring aus einem im Flugzeugbau zulässigen Material dahingehend zu verbessern, dass bei hohen Drehgeschwindigkeiten durch thermisch bedingte Verwerfungen des rotierenden Gleitringes hervorgerufene schädliche Auswirkungen auf die Dichtspaltgeometrie ganz oder weitestgehend vermieden werden.

Zur Lösung dieser Aufgabe wird auf den kennzeichnenden Teil des Patentanspruchs 1 verwiesen. Danach umfasst der rotierende Gleitring wenigstens zwei Teilbereiche, die vorzugsweise aus einem Stück bestehen oder zumindest fest miteinander verbunden sind, nämlich einen Basisbereich und eine Zusatzmasse in Gestalt eines Ansatzbereiches. Der Schwerpunkt des Ansatzbereiches steht in einem solchen axialen Abstand von dem des Basisbereichs, dass der rotierende Gleitring mit einem in eine bestimmte Richtung gerichteten Drehmonent entsprechend den am Ansatzbereich auftretenden Fliehkräften und dem Schwerpunkteabstand beaufschlagt wird. Hierdurch wird einer thermisch bedingten Verkantung des rotierenden Gleitringes wirksam entgegengetreten und dadurch eine Kompensation der durch die Verkantung geänderten Dichtspaltgeometrie geschaffen, so dass eine gewünschte Dichtspaltgeometrie erhalten wird, wenn die Masse des Ansatzbereiches und der Schwerpunkteabstand entsprechend der im Anspruch 1 erwähnten Beziehung ausgelegt ist. Insbesondere kann eine wirksame Kompensation thermisch bedingter Verwerfungen des rotierenden Gleitrings bei hohen bis sehr hohen Drehgeschwindigkeiten erzielt werden, selbst wenn der rotierende Gleitring aus einem Stahlmaterial besteht, das aufgrund seiner Wärmeleitfähigkeit und seines Wärmeausdehungskoeffizienten ungleich grösseren thermischen Verwerfungen unterworfen ist als keramische Materialien.

Die Erfindung wird nachfolgend anhand einer Ausführungsform und der Zeichnung näher erläutert. Es zeigen:

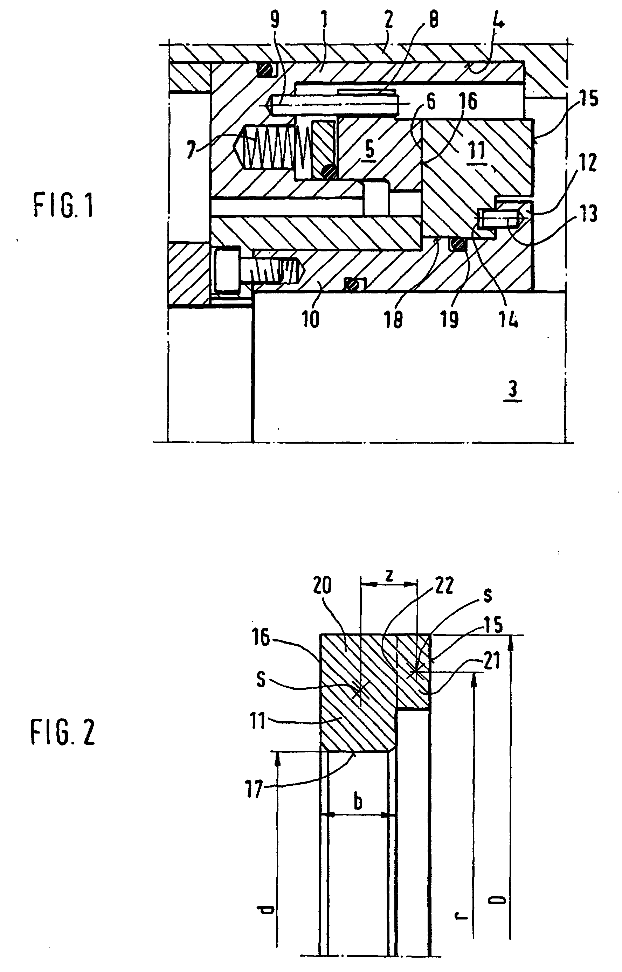

Fig. 1    in längsgeschnittener Ansicht eine Gleitringdichtungsanordnung gemäss einer Ausführungsform der Erfindung nach Einbau in einer abzudichtenden Gerätschaft, und

Fig. 2    in geschnittener fragmentarischer Ansicht den rotierenden Gleitring der Gleitringdichtungsanordnung nach Fig. 1.

Mit dem Bezugszeichen 1 ist ein Dichtungsgehäuse einer Gleitringdichtungsanordnung nach der Erfindung versehen, das in einer Bohrung 4 in einem Gehäuse 2 (in der Zeichnung nur fragmentarisch gezeigt) einer Gerätschaft, z.B. einer Flugzeug-Triebwerksturbine, angeordnet und befestigt werden kann. Eine Welle 3, z.B. eine Turbinenlaufradwelle, erstreckt sich durch die Bohrung 4 nach aussen. Im Dichtungsgehäuse 1 ist ein stationärer Gleitring 5 axial beweglich gehalten, der mit einem rotierenden Gleitring 11 zusammenwirkt. Eine Vorspanneinrichtung, z.B. in Gestalt einer Vorspannfeder 7 oder einer Vielzahl umfänglich verteilter Vorspannfedern, die sich mit einem Ende am stationären Gleitring 5 und am anderen Ende am Dichtungsgehäuse 1 abstützen, ist vorgesehen, um den stationären Gleitring 5 mit einer Vorspannkraft gegen den rotierenden Gleitring 11 zu beaufschlagen. Der stationäre Gleitring 5 ist gegen Verdrehung relativ zum Dichtungsgehäuse 1 gehalten. Obschon andere diesbezügliche Einrichtungen vorgesehen sein können, steht bei der vorliegenden Ausführungsform ein Mitnehmerbolzen 9 axial vom Dichtungsgehäuse 1 ab, der in eine am stationären Gleitring 5 vorgesehene axiale Ausnehmung 8 drehsichernd eingreift.

Auf der Welle 3 ist eine Buchse 10 in geeigneter Weise drehfest montiert. Der rotierende Gleitring 11 ist auf der Buchse 10 in Lossitz aufgesetzt und ist zur gemeinsamen Drehung damit veranlasst, indem von einem flanschförmigen Endbereich 12 der Buchse 10 ein Mitnehmerstift 13 axial absteht, der in eine Bohrung 14 eingreift, die seitens einer dem flanschförmigen Endbereich 12 zugewandten abgestuften Endfläche 15 des rotierenden Gleitringes 11 eingebracht ist Die Abmessungen des Mitnehmerstiftes 13 und der Bohrung 14 sind so, dass hierdurch zwar eine drehkraftübertragende Beziehung zwischen dem rotierenden Gleitring 11 und der Buchse 10 zustande kommt, zwischen den Teilen andererseits ein ausreichendes Spiel vorliegt, so dass der rotierende Gleitring 11 mit der Buchse 10 in Lossitz drehkraftübertragend gekoppelt ist.

Wie dargestellt, überdeckt der flanschförmige Endbereich 12 der Buchse 10 nur einen kleinen radialen Bereich des rotierenden Gleitringes 11 nahe dessen äusserer Endseite 15, so dass dieser rückwärtig im wesentlichen axial abstützungsfrei an der Buchse 10 gehalten ist.

Die einander zugewandten inneren Endflächen der Gleitringe 5, 11 schaffen im wesentlichen radial ausgerichtete Gleitflächen 6, 16, zwischen denen bei Betrieb ein Dichtspalt gebildet wird, der die Gleitflächen 6, 16 in einem berührungslosen Abstand voneinander hält. Bei Stillstand der Welle 3 werden die Gleitflächen 6, 16 dagegen durch die Vorspannkraft der Feder 7 in dichtendem Eingriff miteinander gedrückt, um auch bei Stillstand eine Leckage des abzudichtenden Mediums längs des Bereiches zwischen den Gleitflächen 6, 16 zu unterbinden. Wenn erwünscht, können in einer der Gleitflächen 6, 16 förderwirksame Strukturen eingebracht sein, um ein Medium, z.B. das abzudichtende Medium, zwischen die Gleitflächen zu pumpen und dadurch die Dichtspaltbildung zu fördern. Derartige förderwirksame Strukturen sind dem Fachmann bekannt und brauchen hier nicht näher erläutert zu werden.

Wie dargestellt, umfasst der rotierende Gleitring 11 einen Basisbereich 20 und einen Ansatzbereich 21. Der Basisbereich 20 hat vorzugsweise einen im wesentlichen rechteckförmigen Querschnitt und radiale und axiale Abmessungen, die durch einen äusseren Durchmeser D, einen inneren Durchmesser d und eine axiale Breite b bestimmt sind. An seiner inneren Umfangsfläche 17 sitzt der rotierende Gleitring 11 auf einem äusseren radial vorstehenden Umfangsflächenbereich 18 der Buchse 10 in Lossitz auf. Eine Dichtung, z.B. in Gestalt eines O-Ringes 19, der in einer Ringnut im äusseren Umfangsflächenbereich 18 der Buchse 10 einliegt, ist vorgesehen, um zwischen den Umfangsflächen 17, 18 des rotierenden Gleitringes 11 und der Buchse 10 eine dichtende Beziehung vorzusehen.

Der Ansatzbereich 21 kann, wie dargestellt, ebenfalls vorzugsweise eine rechteckförmige Querschnittskonfiguration haben, doch kann er, wenn erwünscht, auch in beliebiger anderer Weise im Querschnitt gestaltet sein. Vorzugsweise stellt der Ansatzbereich 21 ein integrales Teil an der der Dichtfläche 16 abgewandten Seite des Gleitringes 11 dar. Der Gleitring 11 ist demzufolge vorzugsweise einstückig ausgebildet. Der Ansatzbereich 21 könnte jedoch auch ein separates in geeigneter Weise, z.B. durch Schweissen oder Kleben, am Basisbereich 20 befestigtes Teil sein, das dann aus dem gleichen oder einem unterschiedlichen Stahlmaterial wie das des Basisbereiches 20 bestehen könnte. Der äussere Durchmesser des Ansatzbereiches 21 kann dem des Basisbereiches 20 entsprechen, er könnte jedoch davon auch verschieden sein.

In der Zeichnung ist die virtuelle axiale Grenze zwischen dem Basisbereich 20 und dem Ansatzbereich 21 durch eine gestrichelte Linie 22 angedeutet. Mit S ist der Flächenschwerpunkt des Basisbereiches 20 und mit s der des Ansatzbereiches 21 bezeichnet. Der radiale Abstand des Flächenschwerpunktes s des Ansatzbereiches 21 von der Mittenlängsachse der Gleitringdichtungsanordnung ist mit r und der axiale Abstand der Flächenschwerpunkte S und s voneinander mit z bezeichnet.

Der Ansatzbereich 21 schafft eine zusätzliche Masse m, die bei Betrieb der Gleitringdichtungsanordnung Fliehkräfte erzeugt, die in der radialen Ebene durch den Flächenschwerpunkt s angreifen. Wegen des axialen Abstandes z, den der Flächenschwerpunkt s vom Flächenschwerpunkt S des Basisbereiches 20 hat, wird durch die Fliehkräfte ein Drehmoment erzeugt, das in einer Richtung wirksam ist, dass der rotierende Gleitring 11 hierdurch gegen den stationären Gleitring 5 gedreht bzw. gekippt wird, was aufgrund des Lossitzes, den der rotierende Gleitring 11 gegenüber der Buchse 10 einnimmt, nicht behindert ist.

Versuche haben gezeigt, dass die Masse m des Ansatzbereiches 21 und der Schwerpunkteabstand z, die erforderlich sind, dass eine Kippung des rotierenden Gleitringes 11 mit der unerwünschten V-Spaltbildung im wesentlichen kompensiert wird, mit guter Annäherung nach folgenden Beziehungen bestimmt werden können:

$$m*z=k*10^{-2}*\Delta T*\frac{(D - d)*b^2}{r*n^2}*q$$

$$k=\alpha*E$$

In den Beziehungen bedeuten:

$\Delta T$ = Temperaturunterschied zwischen Dichtfläche 16 und Endfläche 15 des Gleitrings 11 [K],
n = Drehzahl [1/s],
D = Aussendurchmesser des Basisbereichs 20 [m],
d = Innendurchmesser des Basisbereichs 20 [m],
b = Breite des Basisbereichs 20 [m],
E = Elastizitätsmodul des Gleitringmaterials [N/m$^2$],
$\alpha$ = Wärmeausdehungskoeffizient des Gleitringmaterials [1/K],
r = radialer Abstand des Flächenschwerpunktes s des Ansatzbereiches 21 [m],
z = axialer Abstand der Flächenschwerpunkte S, s voneinander [m]
m = Masse des Ansatzbereiches 21 [kg].

Der Faktor *q* sollte erfindungsgemäss im Bereich zwischen 0,5 und 2,0, vorzugsweise 0,7 und 1,5, höchstvorzugsweise 0,8 und 1,3 liegen.

Die Funktionsweise der, wie vorbeschrieben, ausgebildeten Gleitringdichtungsanordnung ist wie folgt.

Aufgrund der bei hohen Drehgeschwindigkeiten der Welle 3, z.B. bei Drehzahlen von 10.000 min$^{-1}$ und mehr im Dichtspalt zwischen den Gleitflächen 6, 16 trotz der fehlenden Berührungsnahme entstehenden Reibungswärme (Molekularreibung) erfährt der rotierende Gleitring 11 eine Erwärmung mit einem Temperaturgradienten von der Gleitfläche 16 zur gegenüberliegenden äusseren Endfläche 15. Der Temperaturgradient bewirkt, dass der rotierende Gleitring 11 eine thermisch bedingte Verformung oder Verwerfung erfährt. Die Verwerfungen treten besonders ausgeprägt auf, wenn der rotierende Gleitring 11 aus einem Stahlmaterial mit vergleichsweise geringer Wärmeleitfähigkeit $\lambda$ und hohem Wärmeausdehnungskoeffizienten $\alpha$ besteht. Das Verhältnis $\alpha/\lambda$ ist bei einem Stahlmaterial im Vergleich zu keramischen Materialien, wie SiC oder WC gross, so dass bei gleicher Wärmeentwicklung ein rotierender Gleitring 11 aus einem Stahlmaterial höhere Verwerfungen erfährt als ein solcher aus einem keramischen Material. Die durch die thermisch bedingten Verformungen bei hohen Drehzahlen hervorgerufene Verkantung des rotierenden Gleitrings 11 äussert sich in einer entsprechenden Änderung der Dichtspaltkonfiguration, indem der Dichtspalt um einen Winkel keilspaltförmig geöffnet wird. Ein derartig veränderter Dichtspalt würde erhöhte Leckage zur Folge haben. Dem wird erfindungsgemäss dadurch entgegengetreten, dass die bei hohen Drehzahlen auftretenden Fliehkräfte am Ansatzbereich 21 ausgenutzt werden, um den rotierenden Gleitring 11 mit einer radialen Kraft zu beaufschlagen, die ein Drehmoment mit dem Hebelarm z ausübt, das bewirkt, dass der Gleitring 11 eine Drehung erfährt, die im Sinne einer Verringerung des Dichtspaltöffnungswinkels wirkt, so dass die durch die thermisch bedingte Verformung bewirkte Öffnung des Dichtspaltes kompensiert werden kann. Das kompensierende Drehmoment ist umso grösser, je höher die Drehzahl und demzufolge die thermische Verwerfung ist. Durch entsprechende Auslegung der Masse m des Ansatzbereiches 21 und des axialen Schwerpunktabstandes z kann für jede Gleitringdichtungsanordnung die kompensierende Wirkung des fliehkraftbedingten Drehmomentes nach den vorerwähnten Beziehungen für einen zulässigen Drehzahlbereich vorherbestimmt und optimiert werden, so dass eine vollständige oder annähernd vollständige Kompensation der thermisch bedingten Abweichungen von einer gewünschten Dichtspaltkonfiguration erreicht werden kann.

Obschon die Erfindung vorausgehend anhand einer speziellen Auslegung für den Bedarf des Flugzeug-Turbinenbaus beschrieben wurde, auf welchem Gebiet keramische Materialien für die Gleitringe aus bestimmten Gründen nicht zugelassen werden und diese daher aus einem Stahlmaterial bestehen sollten, versteht es sich, dass die Erfindung nicht auf Gleitringe aus solchem Material beschränkt ist. Vielmehr kann die Erfindung ebenfalls vorteilhaft bei Gleitringdichtungsanordnungen mit Gleitringen aus anderen Materialien, z. B. keramischen Materialien wie SiC oder gesinterten Materialien wie WC und zur Anwendung kommen.

**Patentansprüche**

1.   Gleitringdichtungsanordnung zum Einsatz bei mit hoher Drehgeschwindigkeit rotierenden Bauteilen, mit einem drehfesten Gleitring und einem zur gemeinsamen Drehung mit dem rotierenden Bauteil in Lossitz gehaltenen Gleitring mit einer bei Betrieb im wesentlichen radial ausgerichteten Dichtfläche zum Zusammenwirken mit einer gegenüberliegenden Dichtfläche am drehfesten Gleitring, **dadurch gekennzeichnet, dass** der rotierende Gleitring (11) aus wenigstens zwei Teilbereichen gebildet ist, indem er einen Basisbereich (20) und einen eine zusätzliche Masse schaffenden Ansatzbereich (21) umfasst, dessen Flächenschwerpunkt (s) in einem axialen Abstand vom Flächenschwerpunkt (S) des Basisbereiches steht, wobei der axiale Flächenschwerpunkteabstand z und die Masse m des Ansatzbereiches folgender Beziehung unterliegen:

$$m^*z = k^*10^{-2}*\Delta T^* \frac{(D-d)^* b^2}{r^* n^2}*q$$

$$k = \alpha^* E$$

wobei der Faktor *q* im Bereich zwischen 0,5 und 2,0, vorzugsweise 0,7 und 1,5, höchstvorzugsweise 0,8 und 1,3 liegt, worin bedeuten:

$\Delta T$ = Temperaturunterschied zwischen der Dichtfläche (16) und einer äusseren Endfläche (15) des Gleitrings [K],
n = Drehzahl [1/s],
D = Aussendurchmesser des Basisbereichs [m],
d = Innendurchmesser des Basisbereichs [m],
b = Breite des Basisbereichs [m],
E = Elastizitätsmodul des Gleitringmaterials [N/m$^2$],
$\alpha$ = Wärmeausdehungskoeffizient des Gleitringmaterials [1/K],
r = radialer Abstand des Flächenschwerpunktes des Ansatzbereiches von der Mittenlängsachse der Gleitringdichtungsanordnung [m],
z = axialer Abstand der Flächenschwerpunkte voneinander [m]

m = Masse des Ansatzbereiches [kg],

so dass der rotierende Gleitring mit einem in Richtung auf den drehfesten Gleitring (5) gerichteten Drehmonent entsprechend den am Ansatzbereich herrschenden Fliehkräften und dem Schwerpunkteabstand (z) beaufschlagbar ist.

2. Gleitringdichtungsanordnung nach Anspruch 1, **dadurch gekennzeichnet, dass** der rotierende Gleitring (11) aus einem Stahlmaterial gebildet ist.

3. Gleitringdichtungsanordnung nach Anspruch 1 oder 2, **dadurch gekennzeichnet, dass** der rotierende Gleitring (11) in Lossitz frei axialbeweglich gegenüber dem rotierenden Bauteil abgestützt ist.

4. Gleitringdichtungsanordnung nach Anspruch 1, 2 oder 3, **dadurch gekennzeichnet, dass** der Aussendurchmesser des Basisbereichs (20) und der des Ansatzbereiches (21) im wesentlichen gleich sind.

5. Gleitringdichtungsanordnung nach einem der vorhergehenden Ansprüche, **dadurch gekennzeichnet, dass** der Basis- und Ansatzbereich (20,21) jeweils eine im wesentlichen rechteckförmige Querschnittsfläche haben.

6. Gleitringdichtungsanordnung nach einem der Ansprüche 1 bis 4, **dadurch gekennzeichnet, dass** der Basisbereich (20) eine im wesentlichen rechteckförmige Querschnittsfläche und derAnsatzbereich (21) eine beliebige Querschnittsfläche hat.

7. Gleitringdichtungsanordnung nach einem der vorhergehenden Ansprüche, **dadurch gekennzeichnet, dass** der drehfeste Gleitring (5) aus einem Kohlenstoffmaterial gebildet ist.

## Claims

1. A face seal device for use in components rotating at a high rotational speed, including a non-rotating face seal ring and a face seal ring loosely mounted for common rotation with the rotary component and having a sealing face which, in operation, is substantially radially aligned for co-operation with an opposite sealing face of the non-rotating face seal ring, **characterized in that** the rotary face seal ring (11) is formed of at least two sub-portions comprising a base portion (20) and an extension portion (21), said extension portion providing an additional mass and having an areal centre of gravity (s) axially spaced from the areal centre of gravity (S) of the base portion, whereby the axial spacing z of said areal centres of gravity from each other and the mass m of the extension portion satisfy the following relationships:

$$m*z = k*10^{-2}*\Delta T*\frac{(D-d)*b^2}{r*n^2}*q$$

$$k = \alpha*E$$

in which factor q is in a range between 0.5 and 2.0, preferably between 0.7 and 1.5, and most preferably between 0.8 and 1.3, wherein

$\Delta T$ = the temperature difference between the sealing face (16) and an outer end face (15) of the face seal rings [K],
n = the rotational speed [l/s],
D = the external diameter of the base portion [m],
d = the internal diameter of the base portion [m],
b = the width of the base portion [m],
E = the modulus of elasticity of the material of the face seal ring [N/m$^2$],
$\alpha$ = the co-efficient of thermal expansion of the material of the face seal ring [l/K],
r = the radial spacing between the areal centre of gravity of the extension portion and the central longitudinal axis of the face seal device [m],
z = the axial spacing between the areal centres of gravity [m]
m = the mass of the extension portion [kg],

so that a torque in a direction towards the non-rotating face seal ring can be applied to the rotary face seal ring (5), said torque corresponding to the centrifugal forces prevailing on the extension portion and the spacing (z) of the areal centres of gravity.

2. The face seal device according to claim 1, **characterized in that** the rotary face seal ring (11) is made of a steel material.

3. The face seal device according to claim 1 or 2, **characterized in that** the rotary face seal ring (11) is supported in a loose fit freely moveable in the axial direction relative to the rotary component.

4. The face seal device according to claim 1, 2 or 3, **characterized in that** the external diameter of the base portion (20) and that of the extension portion (21) are substantially equal.

5. The face seal device according to anyone of the preceding claims, **characterized in that** the base and extension portions (20,21) each have a substantially rectangular cross-sectional area.

**6.** The face seal device according to anyone of claim 1 to 4, **characterized in that** the base portion (20) has a substantially rectangular cross-sectional area and the extension portion (21) has an arbitrary cross-sectional area.

**7.** The face seal device according to anyone of the preceding claims, **characterized in that** the non-rotating face seal ring (5) is made of a carbon material.

## Revendications

**1.** Garniture mécanique d'étanchéité à utiliser pour des éléments rotatifs à haute vitesse de rotation, avec un anneau glissant bloqué en rotation, et avec un anneau glissant monté en ajustement libre pour tourner conjointement avec l'élément rotatif et pourvu d'une face d'étanchéité orientée essentiellement radialement en service et destinée à coopérer avec une face d'étanchéité en vis-à-vis sur l'anneau glissant bloqué en rotation, **caractérisée en ce que** l'anneau glissant rotatif (11) est constitué d'au moins deux régions partielles, par le fait qu'il comprend une partie de base (20) et une partie d'extension (21), créant une masse supplémentaire et dont le centroïde (s) se trouve à distance axiale du centroïde (S) de la partie de base, la distance axiale $z$ entre les centroïdes et la masse $m$ de la partie d'extension satisfaisant à la relation suivante:

$$m^*z = k^*10^{-2}{}^*\Delta T^*\frac{(D\text{-}d)^*b^2}{r^*n^2}^*q$$

$$k = \alpha^*E$$

où le facteur $q$ se situe dans la plage comprise entre 0,5 et 2,0, de préférence entre 0,7 et 1, 5, d'une manière particulièrement préférée entre 0,8 et 1, 3, et où:

$\Delta T = $ différence de température entre la face d'étanchéité (16) et une face terminale extérieure (15) de l'anneau glissant [K],

$n = $ vitesse de rotation [1/s],

$D = $ diamètre extérieur de la partie de base [m],

$d = $ diamètre intérieur de la partie de base [m],

$b = $ largeur de la partie de base [m],

$E = $ module d'élasticité du matériau de l'anneau glissant [N/m²],

$\alpha = $ coefficient de dilatation thermique du matériau de l'anneau glissant [1/K],

$r = $ distance radiale entre le centroïde de la partie d'extension et l'axe médian longitudinal de la garniture mécanique d'étanchéité [m],

$z = $ distance axiale entre les centroïdes [m],

$m = $ masse de la partie d'extension [kg],

de sorte que l'anneau glissant rotatif peut être sollicité par un couple dirigé vers l'anneau glissant bloqué en rotation (5), conformément aux forces centrifuges régnant sur la partie d'extension et à la distance (z) entre les centroïdes.

**2.** Garniture mécanique d'étanchéité selon la revendication 1, **caractérisée en ce que** l'anneau glissant rotatif (11) est réalisé en un matériau à base d'acier.

**3.** Garniture mécanique d'étanchéité selon la revendication 1 ou 2, **caractérisée en ce que** l'anneau glissant rotatif (11) est supporté en ajustement libre avec libre déplacement axial par rapport à l'élément rotatif.

**4.** Garniture mécanique d'étanchéité selon la revendication 1,2 ou 3, **caractérisée en ce que** le diamètre extérieur de la partie de base (20) et celui de la partie d'extension (21) sont sensiblement identiques.

**5.** Garniture mécanique d'étanchéité selon l'une des revendications précédentes, **caractérisée en ce que** la partie de base (20) et la partie d'extension (21) possèdent respectivement une aire de section sensiblement rectangulaire.

**6.** Garniture mécanique d'étanchéité selon l'une des revendications 1 à 4, **caractérisée en ce que** la partie de base (20) possède une aire de section sensiblement rectangulaire et la partie d'extension (21) une aire de section quelconque.

**7.** Garniture mécanique d'étanchéité selon l'une des revendications précédentes, **caractérisée en ce que** l'anneau glissant bloqué en rotation (5) est réalisé en un matériau à base de carbone.

FIG. 1

FIG. 2